# EUROPÄISCHE PATENTSCHRIFT

(11) **EP 0 451 515 B1**
(45) Veröffentlichungstag und Bekanntmachung des Hinweises auf die Patenterteilung: **18.05.1994**
(21) Anmeldenummer: 91103724.0
(22) Anmeldetag: 12.03.1991
(51) Int. Cl.: A22C 25/18, B26D 1/28, B26D 3/24, B26D 7/06, B26D 7/10

(54) **Portioniereinrichtung für quaderförmige Platten aus tiefgefrorenen Lebensmitteln, insbesondere Fisch**
Portioning device for quadrangular slabs of deep-frozen foods, especially fish
Dispositif à diviser des plaques quadrangulaires de denrées alimentaires surgelées, en particulier de poissons

(30) Priorität: 30.03.1990 DE 4010199
(43) Veröffentlichungstag der Anmeldung: 16.10.1991
(73) Patentinhaber: HEINZ NIENSTEDT MASCHINENFABRIK GMBH, D-45721 Haltern (DE)
(72) Erfinder: Rosenberger, Jörg, W-4358 Haltern-Flaesheim (DE)
(74) Vertreter: Cohausz & Florack Patentanwälte

(56) Entgegenhaltungen:
- EP-A- 0 362 461
- DE-B- 2 631 851
- GB-A- 949 495
- GB-A- 2 191 969
- US-A- 3 196 917

## Beschreibung

Die Lebensmittelindustrie stellt dem Verbraucher tiefgefrorene Lebensmittel, insbesondere Fisch, in kleinen Portionen, beispielsweise Stäbchen, Trapezen oder ähnlichen Formen zur Verfügung. Um Portionen in Trapezform zu erhalten, wird in der Praxis von drei verschiedenen Möglichkeiten Gebrauch gemacht:
1. Zwei Stangen mit komplementären, die Trapezform der Portionen aufweisenden Querschnitten werden zusammengestellt und davon scheibenweise die Portionen abgeschnitten.
2. Quaderförmige Scheiben in doppelter Größe der gewünschten Portionen werden zu einem Stapel zusammengestellt und gemeinsam etwa diagonal durchtrennt.
3. Platten werden in Scheiben mit doppelter Größe der Portionen geteilt und anschließend werden diese quaderförmigen Scheiben etwa diagonal durchgestanzt.

Alle diese Methoden sind aufwendig und mit Schnittverlust verbunden.

US-A-3 196 917 offenbart eine Portioniervorrichtung für quaderförmige Platten aus tiefgefrorenen Fisch.

Der Erfindung liegt die Aufgabe zugrunde, eine Portioniervorrichtung zu schaffen, mit der ohne Schnittverlust Portionen verschiedener Form hergestellt werden können.

Diese Aufgabe wird mit einer Portioniervorrichtung für quaderförmige Platten aus tiefgefrorenen Lebensmitteln, insbesondere Fisch, gelöst, die durch folgende Merkmale gekennzeichnet ist:
a) Ein Transporttisch weist eine Vorschubbahn mit seitlichen Führungsanschlägen für die quer zur Vorschubrichtung flach liegenden Platten und mit in Vorschubrichtung auf die Hinterkanten der Platten einwirkenden Mitnehmern auf.
b) Über der Transportbahn ist eine synchron mit den Mitnehmern in Vorschubrichtung laufende, angetriebene Trommel angeordnet, deren Mantel mit bis nahe an die Oberseite der Transportbahn reichenden, beheizten Trennstegen bestückt ist.
c) Die Transportbahn ist im Bereich der Trommel als perforierte Platte ausgebildet, durch deren Perforation ein Blasmittel geblasen wird.

Bei der erfindungsgemäßen Portioniereinrichtung wird von Platten und nicht von in Scheiben geteilten Platten ausgegangen. Diese Platten werden in einem Arbeitsgang durch die beheizten Trennstege ohne Schnittverlust in die Portionen gewünschter Form durchtrennt. Da die Platten auf ihrer den Trennstegen abgewandten Unterseite mit dem durch die Perforation geblasenen Blasmittel beaufschlagt sind, wirkt das Blasmittel wie ein Schmierfilm zwischen der Transportbahn und den Platten, so daß es trotz des auf sie durch die Trennstege in Richtung der Transportbahn wirkenden Druckes nicht zu einem Abbremsen der Platten kommt. Darüber hinaus wird der Trennvorgang unterstützt, ohne daß die Trennstege gefährlich nahe an die Oberseite der Transportbahn heranreichen müssen. Während beim Trennen mit Sägen durch Zerspanen Schnittverlust entsteht und beim Trennen durch Stanzen Verlust durch Bröckeln entsteht, entsteht bei der erfindungsgemäßen Portioniervorrichtung wegen der beheizten Trennstege kein Schnittverlust, denn diese weichen das tiefgefrorene Lebensmittel an der vorgesehenen Trennstelle auf, so daß es verlustfrei geteilt werden kann. Die an den Trennfugen aufgeweichten Portionen werden in der Regel durch den Kälteinhalt der Portionen wieder gefroren. Dieser Vorgang kann noch dadurch unterstützt werden, daß unmittelbar hinter der Trommel Blasdüsen angeordnet sind, mit denen ein gasförmiges Kühlmittel auf die in Portionen getrennten Platten geblasen wird.

Die Beheizung der Trennstege läßt sich auf einfache Art und Weise dadurch verwirklichen, daß vor der Trommel Blasdüsen vorgesehen sind, mit denen warme Blasluft auf die Trennstege geblasen wird.

Die Form der Trennstege richtet sich nach der gewünschten Form der Portionen. Vorzugsweise sind die Trennstege als Ringscheiben ausgebildet, die in Ebenen senkrecht zur Trommelachse liegen. Mit einer nur so weit ausgebildeten Portioniervorrichtung werden quaderförmige Portionen erhalten. Parallelogrammförmige Portionen werden erhalten, wenn die Trennstege bogenbörmig ausgebildet sind und schräg über den Trommelmantel verlaufen. Werden beide Formen von Trennstegen kombiniert, erhält man trapezförmige Portionen.

Im folgenden wird die Erfindung anhand einer ein Ausführungsbeispiel darstellenden Zeichnung näher erläutert.

Im einzelnen zeigen:

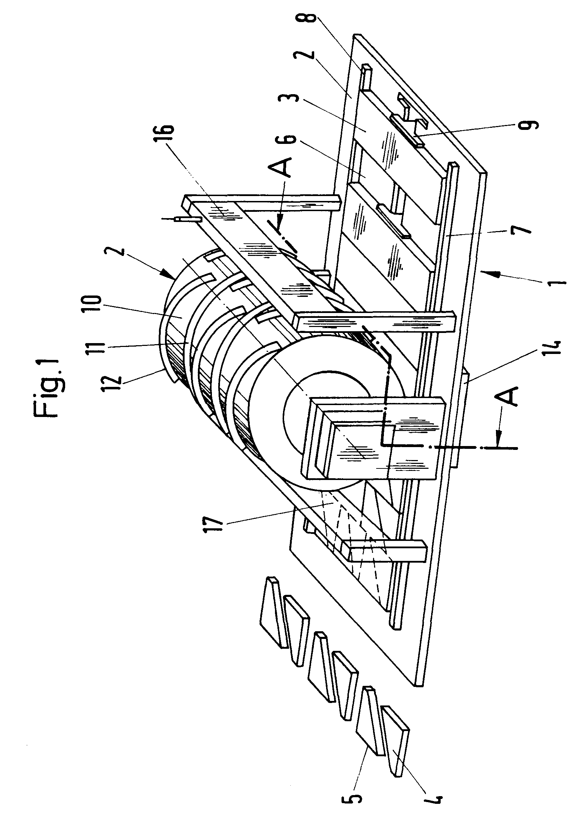

- Fig. 1: eine Portioniervorrichtung in perspektivischer Darstellung,

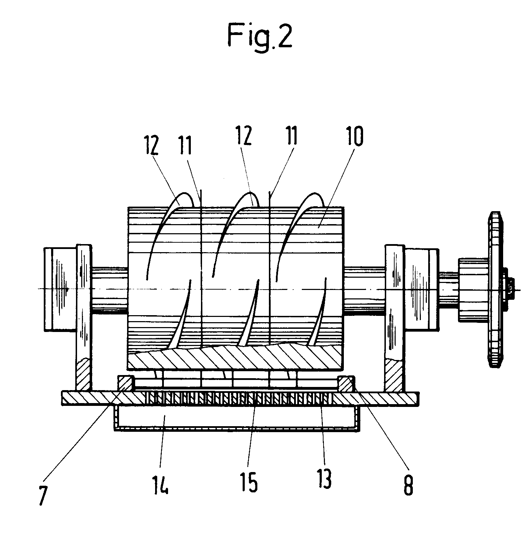

- Fig. 2: die Portioniervorrichtung der Fig. 1 teilweise in Vorderansicht und teilweise im Axialschnitt nach der Linie A-A der Fig. 1.

Die Portioniereinrichtung für quaderförmige Platten 3 aus tiefgefrorenem Fisch besteht aus einem Transporttisch 1 und einer über ihm angeordneten Trommel 2 zum Trennen von quaderförmigen Platten 3 in kleine trapezförmige Portionen 4,5.

Der Transporttisch 1 weist eine Transportbahn 6 für die fachliegend und in Querlage zu transportierenden Platten 3 mit seitlichen Führungsanschlägen 7,8 und an den Hinterkanten der Platten 3 angreifenden Mitnehmern 9 auf. Die Mitnehmer 9 entnehmen die Platten 3 beispielsweise einem nicht dargestellten Magazin, indem sie übereinander gestapelt sind und schieben sie zusammen, so daß sie im Bereich der Trommel 2 lückenlos sich aneinanderreihen. Die Trommel 2 ist auf ihrem Mantel 10 mit verschiedenen Trennstegen 11,12 bestückt. Die Trennstege 11 sind als Ringscheiben ausgebildet und in Ebenen senkrecht zur Trommelachse angeordnet, während die Trennstege 12 bogenförmig ausgebildet und schräg zur Trommelachse angeordnet sind. In Umfangsrichtung der Trommel 2 haben die bogenförmigen Trennstege 12 eine Länge, die der Länge der Platten 3 in Vorschubrichtung gesehen entspricht. Die Trommel 2 ist angetrieben und mit den Mitnehmern 9 derart synchronisiert, daß Anfang und Ende der bogenförmigen Trennstege 12 mit den vorderen und hinteren Rändern der Platten 3 beim Transport zusammentreffen.

Die Transportbahn 6 ist glatt ausgebildet. Im Bereich der Trommel 2 ist sie als perforierte Platte 13 ausgebildet und weist unterseitig einen Blaskasten 14 auf, aus dem Blasluft über die perforierte Platte 13 zwischen die Unterseite der zu trennenden Platten 3 und die Oberseite der Transportbahn 6 geblasen werden kann. Diese eingeblasene Luft wirkt im Bereich der Trommel 2 als Schmierfilm 15. Aufgrund dieses Schmierfilms 15 wird verhindert, daß die Platten 3 beim Trennvorgang infolge des auf sie von den Trennstegen 11,12 gegen die Transportbahn 6 ausgeübten Druckes Reibungskräften ausgesetzt wird, die den leichten Weitertransport behindern. Der Schmierfilm 15 sorgt auch dafür, daß die leicht angehobenen, zu durchtrennenden Platten 3 vollständig durchtrennt werden, ohne daß es notwendig ist, daß die Trennstege 11,12 mit ihren Scheiteln in gefährlicher Berührungsnähe der Transportbahn 6 angeordnet sein müssen.

Der Trommel 2 ist in Transportrichtung eine Heizeinrichtung 16 vorgeordnet, die als Blaskasten mit einer Vielzahl von Blasdüsen ausgebildet ist. Über die Blasdüsen wird warme Luft auf die Trennstege 11,12 geblasen, damit diese erwärmt werden. In Transportrichtung hinter der Trommel 2 ist ein ähnlicher Blaskasten 17 angeordnet, der über Blasdüsen ein gasförmiges Kühlmittel auf die getrennten Platten bläst, um das erneute Gefrieren des an den Trennfugen aufgeweichten Fisches zu unterstützen.

## Patentansprüche

1. Portioniervorrichtung für quaderförmige Platten aus tiefgefrorenen Lebensmitteln, insbesondere Fisch,
**gekennzeichnet durch** folgende Merkmale:
a) Ein Transporttisch (1) weist eine Vorschubbahn (6) mit seitlichen Führungsanschlägen (7,8) für die quer zur Vorschubrichtung flach liegend zu transportierenden Platten (3) und in Vorschubrichtung auf die Hinterkanten der Platten (3) einwirkende Mitnehmer (9) auf.
b) Über der Transportbahn (6) ist eine in Vorschubrichtung synchron mit den Mitnehmern (9) laufende, angetriebene Trommel (2) angeordnet, deren Mantel (10) mit bis nahe an die Oberseite der Transportbahn (6) heranreichenden, beheizten Trennstegen (11,12) bestückt ist.
c) Die Transportbahn (6) ist im Bereich der Trommel (2) als perforierte Platte (13) ausgebildet, durch deren Perforation ein Blasmittel geblasen wird.

2. Portioniervorrichtung nach Anspruch 1,
**dadurch gekennzeichnet,** daß unmittelbar hinter der Trommel (2) Blasdüsen (12) angeordnet sind, mit denen ein gasförmiges Kühlmittel auf die in Portionen getrennten Platten (3) geblasen wird.

3. Portioniervorrichtung nach Anspruch 1 oder 2,
**dadurch gekennzeichnet,** daß für die Beheizung der Trennstege (11,12) vor der Trommel (2) Blasdüsen (16) vorgesehen sind, mit denen warme Blasluft auf die Trennstege (11,12) geblasen wird.

4. Portioniervorrichtung nach einem der Ansprüche 1 bis 3,
**dadurch gekennzeichnet,** daß die Trennstege (11) als Ringscheiben ausgebildet sind, die in Ebenen senkrecht zur Trommelachse liegen.

5. Portioniervorrichtung nach einem der Ansprüche 1 bis 4,
**dadurch gekennzeichnet,** daß die Trennstege (12) bogenförmig ausgebildet sind und schräg über dem Trommelmantel (10) verlaufen.

## Claims

1. A portioning device for parallelipipedic slabs of deep-frozen foodstuffs, more particularly fish, characterized by the following features:
a) A conveying table (1) has a feed path (6) having lateral guide stops (7, 8) for the slabs (3) to be conveyed lying flat transversely of the feed direction, and entraining members (9) which act on the rear edges of the slabs (3) in the feed direction.
b) Disposed above the conveying path (6) is a driven drum (2) which runs synchronously with the entraining members (9) in the feed direction and whose generated surface (10) is equipped with heating separating webs (11, 12) extending to close to the top side of the conveying path (6).
c) In the zone of the drum (2) the conveying path (6) takes the form of a perforate plate (13), through whose perforation a blowing agent is blown.

2. A portioning device according to claim 1, characterized in that disposed immediately downstream of the drum (2) are blowing nozzles (12) by which a gaseous cooling agent is blown on to the slabs (3) divided into portions.

3. A portioning device according to claim 1 or 2, characterized in that for the heating of the separating webs (11, 12) upstream of the drum (2), blowing nozzles (16) are provided by which hot blowing air is blown on to the separating webs (11, 12).

4. A portioning device according to one of claims 1 to 3, characterized in that the separating webs (11) take the form of annular discs which lie in planes perpendicularly to the drum axis.

5. A portioning device according to one of claims 1 to 4, characterized in that the separating webs (12) are constructed arcuate and extend at an angle over the drum generated surface (10).

## Revendications

1. Dispositif à diviser des plaques quadrangulaires de denrées alimentaires surgelées, en particulier de poissons, caractérisé par les caractéristiques suivantes :
a) une table de transport (1) comporte une voie d'avance (6) munie de butées latérales de guidage (7,8) pour les plaques (3) à transporter disposées transversalement à la direction d'avance, et un entraîneur (9) agissant sur les bords arrière des plaques (3) dans la direction d'avance,
b) au-dessus de la voie d'avance (6) se trouve un tambour (2) pouvant être entraîné dans la direction d'avance de manière synchrone avec les entraîneurs (9), et dont l'enveloppe (10) est garnie de nervures de séparation chauffées (11, 12) qui s'étendent jusqu'au voisinage du côté supérieur de la voie de transport (6),
c) et dans la zone du tambour (2), la voie de transport (6) est constituée par une plaque perforée (13) par les perforations de laquelle est soufflé un moyen de soufflage.

2. Dispositif à diviser selon la revendication 1, caractérisé en ce que, immédiatement derrière le tambour (2) sont disposées des tuyères de soufflage au moyen desquelles peut être soufflé un moyen de refroidissement gazeux sur les plaques (3) séparées en portions.

3. Dispositif à diviser selon la revendication 1 ou 2, caractérisé en ce que, pour le chauffage, des nervures de séparation (11, 12) et des tuyères de soufflage (16) sont prévues devant le tambour (2), et de l'air de soufflage chaud peut être soufflé sur les nervures de séparation (11, 12) au moyen desdites tuyères.

4. Dispositif à diviser selon l'une des revendications 1 à 3, caractérisé en ce que les nervures de séparation (11) sont constituées par des plaques annulaires disposées dans des plans perpendiculaires à l'axe du tambour.

5. Dispositif à diviser selon l'une des revendications 1 à 4, caractérisé en ce que les nervures de séparation (12) sont conformées en arcs et inclinées sur l'enveloppe (10) du tambour.
